# EUROPEAN PATENT APPLICATION

(11) **EP 3 098 983 A1**
(43) Date of publication of application: **30.11.2016**
(21) Application number: 16170617.1
(22) Date of filing: 20.05.2016
(51) Int. Cl.: H04B 11/00

(54) **INFORMATION DELIVERY SYSTEM**

(30) Priority: 28.05.2015 JP 2015108923
(71) Applicant: Ricoh Company, Ltd., Tokyo 143-8555 (JP)
(72) Inventor: YOSHIZAWA, Fumio, Tokyo, 143-8555 (JP); KAWASE, Tsutomu, Tokyo, 143-8555 (JP); MATSUSHITA, Yusuke, Tokyo, 143-8555 (JP); EBESU, Takafumi, Tokyo, 143-8555 (JP); SHINOTSUKA, Michiaki, Tokyo, 143-8555 (JP)
(74) Representative: Schwabe - Sandmair - Marx

(57) **Abstract**

An information delivery system (24) includes a storage unit (26, 28) configured to store a plurality of pieces of information to be delivered to a plurality of respective intended delivery regions (16, 18, 20, 22), a first sound-wave emitter (10) configured to emit the pieces of information for the respective intended delivery regions (16, 18, 20, 22) toward the plurality of intended delivery regions (16, 18, 20, 22) in a form of inaudible sound waves, and a control unit (34) configured to cause the first sound-wave emitter (10) to emit the pieces of information stored in the storage unit (26, 28).

## Description

### BACKGROUND OF THE INVENTION

### 1. Field of the Invention

The present invention relates to information delivery systems.

### 2. Description of the Related Art

A delivery system (communication system) in which inaudible sound beacons (e.g., ultrasonic beacons or ultrasonic speakers) are disposed in an indoor facility to deliver various content information to mobile terminals of facility users through use of ultrasonic waves is proposed and put into actual use. For example, ultrasound carrying code information associated with content information is emitted from an ultrasonic beacon disposed on a ceiling surface or the like of an indoor facility. A mobile terminal of a facility user receives the ultrasound with a microphone included in the mobile terminal to acquire the code information. The facility user can acquire specific content information by accessing a web site from the mobile terminal using the acquired code information. For example, it is possible to provide a facility user with information about a store only when the user approaches the store in a stealth manner by delivering, for each store in the facility, code information unique to the store in a form of ultrasound. An example of this technique is disclosed in Japanese Patent No. 5429826. In such an information delivery system using ultrasound, a method of determining information received with a maximum sound (volume) as valid and ignoring the other sounds to select information is known. More specifically, when ultrasonic beacons delivering different pieces of information are adjacently disposed, coverages of the pieces of information are individually configurable by individually adjusting volume of the ultrasonic beacons. End of the coverages or a boundary (geofence) between the coverages is the position of demarcation between the pieces of information.

It is known that ultrasound has a property of being prone to be absorbed by a cloth and body of a facility user and reflected off a fixture or the like in a facility. For example, in an area crowded with people, such as a shopping avenue or a railroad-station concourse, it is possible that ultrasound emitted from an ultrasonic beacon is absorbed by a large number of facility users and fails to reach a preset geofence (i.e., a boundary further from the ultrasonic beacon). For example, there can be a situation where, to provide different pieces of information to inside and outside of a gate, volume for a beacon inside the gate (hereinafter, "in-gate beacon") and volume for a beacon outside the gate (hereinafter, "out-gate beacon") are set so as to dispose a geofence at the position of the gate. In such a situation, if there are a large number of facility users around the out-gate beacon, it is possible that ultrasound from the out-gate beacon is absorbed by the large number of facility users outside the gate and fails to reach the gate. In other words, the position of the geofence becomes unstable. Under the circumstances, ultrasound from the in-gate beacon is more likely to be received than ultrasound from the out-gate beacon in an area near and outside the gate. That is, the geofence is displaced toward the out-gate beacon. As a result, a disadvantage that the information for inside the gate is acquirable outside the gate can undesirably occur. A disadvantage that the information for outside the gate is acquirable inside the gate can also undesirably occur.

The present invention is made in view of the problem described above, and has an object to provide an information delivery system where a geofence is set stably irrespective of presence or absence of facility users and therefore information delivery regions are more likely to be stable.

### SUMMARY OF THE INVENTION

According to one aspect of the present invention, an information delivery system includes a storage unit, a first sound-wave emitter and a control unit. The storage unit is configured to store a plurality of pieces of information to be delivered to a plurality of respective intended delivery regions. The first sound-wave emitter is configured to emit the pieces of information for the respective intended delivery regions toward the plurality of intended delivery regions in a form of inaudible sound waves. The control unit is configured to cause the first sound-wave emitter to emit the pieces of information stored in the storage unit.

According to the configuration described above, because the distance from a first sound-wave emitter to a boundary (geofence) between intended delivery regions can be reduced, chances that inaudible sound waves are absorbed or reflected can be reduced. As a result, the geofence becomes less positionally unstable, which increases accuracy in information delivery.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a top view illustrating an example of intended delivery regions formed by a first sound-wave emitter of an information delivery system of an embodiment;
FIG. 2 is a side view of a passage for illustration of the example of the intended delivery regions formed by the first sound-wave emitter of the information delivery system of the embodiment;
FIGS. 3A and 3B are views illustrating an example of a surface sound source included in the first sound-wave emitter of the information delivery system of the embodiment and how ultrasound emitted therefrom travels, FIG. 3A being a view illustrating the surface sound source having a flat shape, FIG. 3B being a view illustrating the surface sound source having a curved shape;
FIGS. 4A and 4B are top views illustrating intended delivery regions formed by sound-wave emitters of an information delivery system of a comparative example, FIG. 4A being a view illustrating positions of the intended delivery regions and geofences with no user present, FIG. 4B being a view illustrating positions of the delivery regions and the geofences with a majority of users being near one of the sound-wave emitters;
FIG. 5 is a top view for describing an example where four intended delivery regions are formed by the first sound-wave emitter of the information delivery system of the embodiment;
FIG. 6 is a diagram illustrating an example of a functional block diagram of the information delivery system of the embodiment;
FIG. 7 is a flowchart for describing an example of a delivery preparation procedure carried out by the information delivery system of the embodiment;
FIG. 8 is a flowchart for describing an example of a code-information delivery procedure carried out by the information delivery system of the embodiment;
FIG. 9 is a diagram illustrating an example of a timing chart for code information delivery by the information delivery system illustrated in FIG. 6;
FIG. 10 is a view for describing an example of acquisition of code information by a facility user moving across a plurality of intended delivery regions;
FIG. 11 is a top view for describing an example of dividing an intended delivery region of the information delivery system of the embodiment into a first intended delivery region and a second intended delivery region in such a manner that the width of the passage is divided;
FIG. 12 is a top view for describing displacement of a geofence further from the first sound-wave emitter caused by presence of facility users in the information delivery system of the embodiment;
FIG. 13 is a top view illustrating a second sound-wave emitter for correcting the displacement, illustrated in FIG. 12, of the geofence further from the first sound-wave emitter and the thus-corrected intended delivery region;
FIGS. 14A and 14B are views of a modification example of the information delivery system of the embodiment, FIG. 14A illustrating a modification of an ultrasonic speaker layout of the first sound-wave emitter, FIG. 14B being a view for describing intended delivery regions formed by the first sound-wave emitter;
FIGS. 15A and 15B are views of another modification example of the information delivery system of the embodiment, FIG. 15A illustrating another modification of the ultrasonic speaker layout of the first sound-wave emitter, FIG. 15B being a view for describing intended delivery regions formed by the first sound-wave emitter; and
FIG. 16 is a side view for describing an example of adjustment of positions of the geofences performed by the information delivery system of the embodiment.

The accompanying drawings are intended to depict exemplary embodiments of the present invention and should not be interpreted to limit the scope thereof. Identical or similar reference numerals designate identical or similar components throughout the various drawings.

### DETAILED DESCRIPTION OF THE PREFERRED EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings.

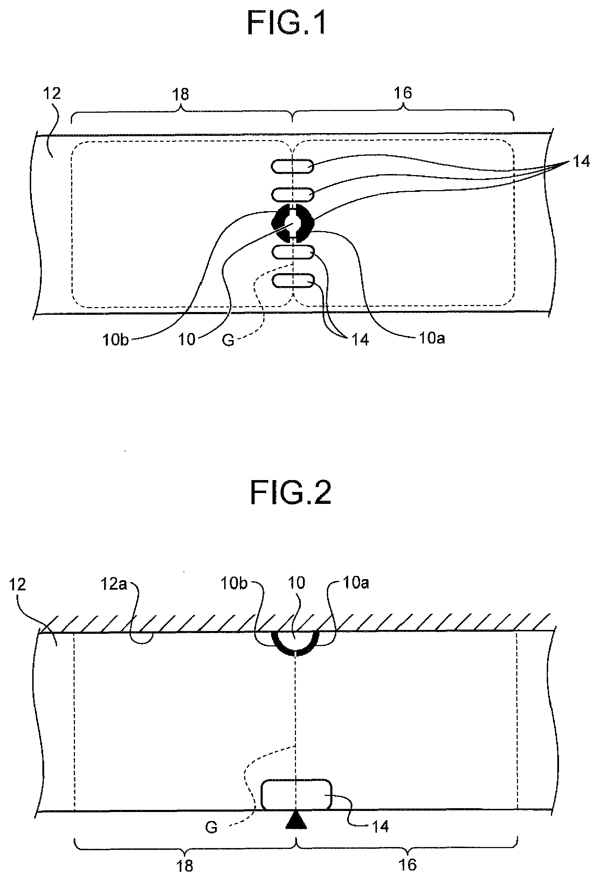

FIG. 1 is a top view illustrating an example of intended delivery regions formed by a first sound-wave emitter of an information delivery system of a present embodiment. FIG. 2 is a side view of a passage for illustration of the example of the intended delivery regions formed by the first sound-wave emitter of the information delivery system. A first sound-wave emitter 10 (ultrasonic beacons, ultrasonic speakers) of the information delivery system of the present embodiment emits, toward a plurality of intended delivery regions (e.g., two or more different intended delivery regions), pieces of information for the respective intended delivery regions, in a form of inaudible sound waves (ultrasound). The information delivery system converts code information, which is associated with information to be provided, into an analog voltage signal to obtain ultrasound with a volume to be output, to output the code information from the ultrasonic speakers. The ultrasound is received by, for example, a microphone of a mobile terminal (e.g., a smartphone or a cellular phone). The mobile terminal can acquire specific content information (and display the content information on the mobile terminal) by converting the received ultrasound into the original code information and accessing a web site, for example.

In the example illustrated in FIGS. 1 and 2, a passage 12 is divided into two regions at a plurality of gates 14 (e.g., ticket gates). Different pieces of information are individually delivered to the respective regions. The first sound-wave emitter 10 is disposed on a ceiling surface 12a right above the gates 14, for example. If no ceiling surface is disposed or the distance to a ceiling surface is large, the first sound-wave emitter 10 may be supported on a support, such as a support column. The first sound-wave emitter 10 includes a first ultrasonic speaker 10a that forms a first intended delivery region 16 on the outside of the gates 14 (on the right of the gates 14 in FIG. 1) and a second ultrasonic speaker 10b that forms a second intended delivery region 18 on the inside of the gates 14 (on the left of the gates 14 in FIG. 1). Information valid in the first intended delivery region 16 (i.e., on the outside of the gates 14) is delivered to the first intended delivery region 16, while information valid in the second intended delivery region 18 is delivered to the second intended delivery region 18 (i.e., on the inside of the gates 14). Examples of the information valid on the outside of the gates 14 include information about a store disposed outside the gates 14. Examples of the information valid on the inside of the gates 14 include information about an attraction event taking place inside the gates 14 and information about a store inside the gates 14.

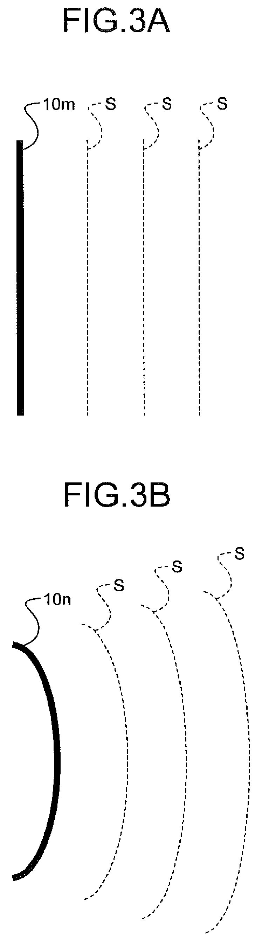

Each of FIGS. 3A and 3B illustrates an example of how ultrasound S emitted from an ultrasonic speaker being a surface sound source included in the first sound-wave emitter 10 travels. Sound tends to travel straightforward when the frequency of the sound is high. The speaker being the surface sound source as illustrated in FIG. 3A, 3B emits plane-wave sound; this is because the whole surface of the speaker being the surface sound source vibrates in the same direction. Such plane-wave sound has a property of traveling more straightforward than sound from a typical point source speaker and therefore spreads over a smaller angle and attenuates less with the distance. Accordingly, a highly-directive straightforward wave can be obtained by forming a surface sound source as, for example, a flat-surface speaker 10m illustrated in FIG. 3A and causing the ultrasound S to be emitted therefrom. It is possible to control the angle (directivity), over which the ultrasound S spreads, using a curved-surface speaker 10n, which is obtained by curving the flat-surface speaker 10m. More specifically, transmission spread angle of the ultrasound S, which is less prone to attenuation, is easy to adjust (control) by appropriately setting an angle and area at which the flat-surface speaker 10m is to be curved. FIG. 1 illustrates an example, in which each of the first ultrasonic speaker 10a and the second ultrasonic speaker 10b has an ultrasound transmission spread angle (emission spread angle) of approximately 180 degrees.

The curved-surface speaker 10n illustrated in FIG. 3B can be applied to the first ultrasonic speaker 10a and the second ultrasonic speaker 10b of the first sound-wave emitter 10. The first ultrasonic speaker 10a and the second ultrasonic speaker 10b are oriented in the opposite directions (apart by 180 degrees). As a result, the first intended delivery region 16 and the second intended delivery region 18 demarcated based on the position of the first sound-wave emitter 10 (for example, at the position of the first sound-wave emitter 10) are formed. With this configuration, the boundary (a geofence G) between different pieces of information can be disposed at a position based on the position of the first sound-wave emitter 10 (e.g., right below the first sound-wave emitter 10). Accordingly, it is possible to reduce the distance between the first sound-wave emitter 10 and the geofence G (i.e., dispose the geofence G near the first sound-wave emitter 10). Put another way, the geofence G can be disposed at a position where ultrasound volume is maximum. As a result, irrespective of the position of an object (e.g., a facility user or a structure in the facility) that absorbs or reflects ultrasound in the first intended delivery region 16 or the second intended delivery region 18, the position where the ultrasound volume is maximum is less prone to displacement. Hence, the geofence G can be positionally stabilized.

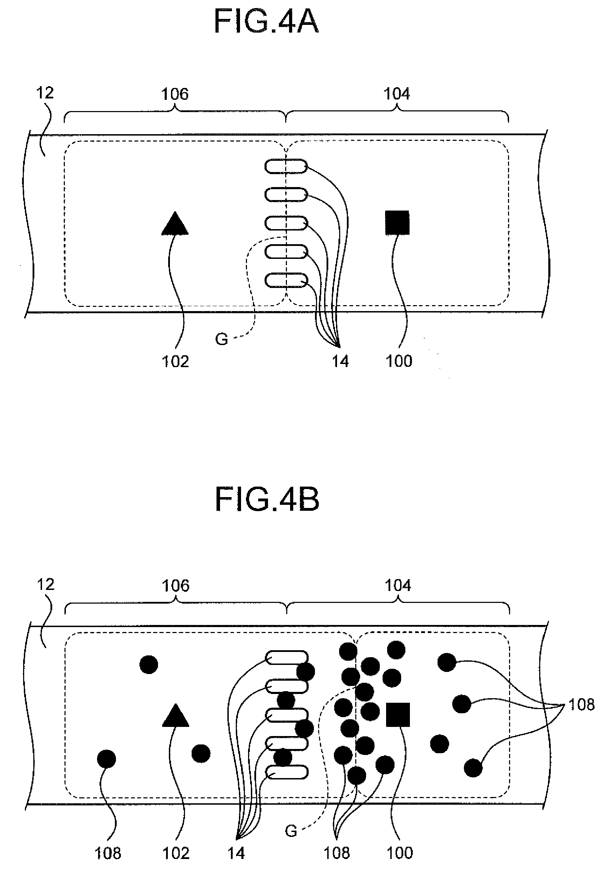

FIGS. 4A and 4B illustrate a comparative example where two ultrasonic beacons (sound-wave emitters) delivering different pieces of information set up the geofence G, which is a boundary between the pieces of information. Referring to FIG. 4A, the passage 12 is divided with the gates 14 into two regions, and an ultrasonic beacon 100 and an ultrasonic beacon 102 are disposed in the respective regions, thereby forming an intended delivery region 104 and an intended delivery region 106. More specifically, the regions are formed so as to locate the gates 14 on a perimeter of a coverage of ultrasound traveling from the ultrasonic beacon 100 toward the gates 14 and a perimeter of a coverage of ultrasound traveling from the ultrasonic beacon 102 toward the gates 14. In short, the regions are formed so as to locate the gates 14 on the geofence G, which is the boundary for switching between the pieces of information. Assume that facility users 108 are situated as illustrated in FIG. 4B in the passage 12 where the geofence G is set up in this manner. Referring to FIG. 4B, the large number of facility users 108 is situated between the gates 14 and the ultrasonic beacon 100. Hence, ultrasound emitted from the ultrasonic beacon 100 is absorbed by the facility users 108 situated between the gates 14 and the ultrasonic beacon 100, which makes it difficult for the ultrasound to reach the gates 14. As a result, in an area between the gates 14 and the ultrasonic beacon 100, the volume of ultrasound from the ultrasonic beacon 100 becomes smaller than the volume of ultrasound from the ultrasonic beacon 102. Accordingly, mobile terminals carried by the facility users 108 in the area between the gates 14 and the ultrasonic beacon 100 detect (receive) the ultrasound from the ultrasonic beacon 102 as ultrasound of a large volume, and recognize the ultrasound as valid information. Put another way, the geofence G is undesirably displaced toward the ultrasonic beacon 100. Hence, the possibility that the facility users 108 in the area between the gates 14 and the ultrasonic beacon 100 (i.e., on the outside of the gates 14) acquire the information based on the ultrasound emitted from the ultrasonic beacon 102 rather than the information, which should be acquired in the area, based on the ultrasound emitted from the ultrasonic beacon 100 increases.

By contrast, in the information delivery system of the present embodiment, as illustrated in FIGS. 1 and 2, the first intended delivery region 16 and the second intended delivery region 18 separated based on the position of the first sound-wave emitter 10 are formed. As a result, irrespective of the position of an object (e.g., a facility user or a structure in the facility) that absorbs or reflects ultrasound in the first intended delivery region 16 or the second intended delivery region 18, the position where the ultrasound (volume) is maximum is less prone to displacement. Hence, positional stability of the geofence G is improved. Accordingly, irrespective of presence or absence of a facility user or the like, information that should be acquired in the first intended delivery region 16 can be acquired more reliably on the outside of the gates 14 (i.e., in the first intended delivery region 16); information that should be acquired in the second intended delivery region 18 can be acquired more reliably on the inside of the gates 14 (i.e., in the second intended delivery region 18).

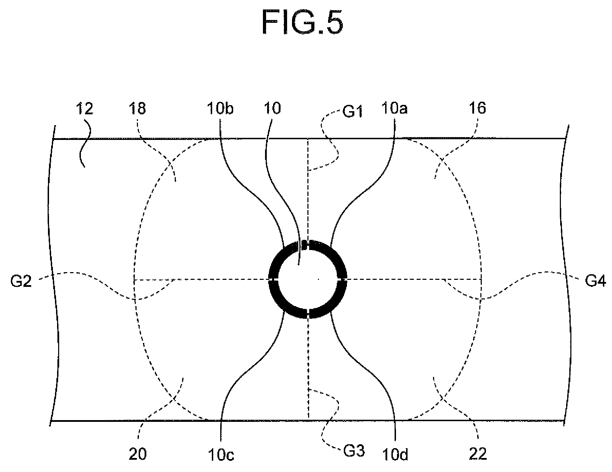

FIG. 5 illustrates a modification example of the first sound-wave emitter 10 configured to emit pieces of information for respective four intended delivery regions toward the four intended delivery regions, in the form of ultrasound. Referring to FIG. 5, the first sound-wave emitter 10 includes the first ultrasonic speaker 10a, the second ultrasonic speaker 10b, a third ultrasonic speaker 10c, and a fourth ultrasonic speaker 10d. FIG. 5 illustrates an example, in which each of the first ultrasonic speaker 10a, the second ultrasonic speaker 10b, the third ultrasonic speaker 10c, and the fourth ultrasonic speaker 10d has an ultrasound transmission spread angle (emission spread angle) of approximately 90 degrees. The first ultrasonic speaker 10a forms the first intended delivery region 16; the second ultrasonic speaker 10b forms the second intended delivery region 18. The third ultrasonic speaker 10c forms a third intended delivery region 20; the fourth ultrasonic speaker 10d forms a fourth intended delivery region 22. Accordingly, in the example illustrated in FIG. 5, a geofence G1 on the boundary between the first intended delivery region 16 and the second intended delivery region 18 is set up as a geofence, or a boundary between ultrasounds for transmitting different pieces of information. Similarly, a geofence G2 on the boundary between the second intended delivery region 18 and the third intended delivery region 20, a geofence G3 on the boundary between the third intended delivery region 20 and the fourth intended delivery region 22, and a geofence G4 on the boundary between the fourth intended delivery region 22 and the first intended delivery region 16 are set up. Also in this example, irrespective of the position of an object (e.g., a facility user or a structure in the facility) that absorbs or reflects ultrasound in any one of the first to fourth intended delivery regions 16 to 22, the position where the ultrasound (volume) is maximum is less prone to displacement. Hence, positional stability of the geofences G1 to G4 can be improved. More specifically, information that should be acquired in the first intended delivery region 16 can be acquired more reliably in the first intended delivery region 16; information that should be acquired in the second intended delivery region 18 can be acquired more reliably in the second intended delivery region 18. The same holds true with the third intended delivery region 20 and the fourth intended delivery region 22.

The pieces of information to be provided to the four intended delivery regions, which are the first to fourth intended delivery regions 16 to 22, in the form of ultrasound using the single first sound-wave emitter 10 as illustrated in FIG. 5, may be different pieces of information from one another. Alternatively, the same information may be provided to two or more of the four intended delivery regions. For example, information may be provided in such a manner that first information is provided to the first intended delivery region 16 and the second intended delivery region 18, while second information is provided to the third intended delivery region 20 and the fourth intended delivery region 22. For another example, information may be provided in such a manner that first information is provided to the first intended delivery region 16 and the third intended delivery region 20, while second information is provided to the second intended delivery region 18 and the fourth intended delivery region 22. For still another example, information may be provided in such a manner that first information is provided to the first, second, and third intended delivery regions 16, 18, and 20, while second information is provided only to the fourth intended delivery region 22. With a configuration where first information is provided to the first intended delivery region 16 and the fourth intended delivery region 22, while second information is provided to the second intended delivery region 18 and the third intended delivery region 20, information can be provided approximately as with such a configuration as illustrated in FIG. 1 including two ultrasonic speakers. Hence, if the first sound-wave emitter 10 is configured to include the four ultrasonic speakers illustrated in FIG. 5, it is possible to adapt to various information provision patterns, which leads to unification of equipment and cost reduction associated with the unification.

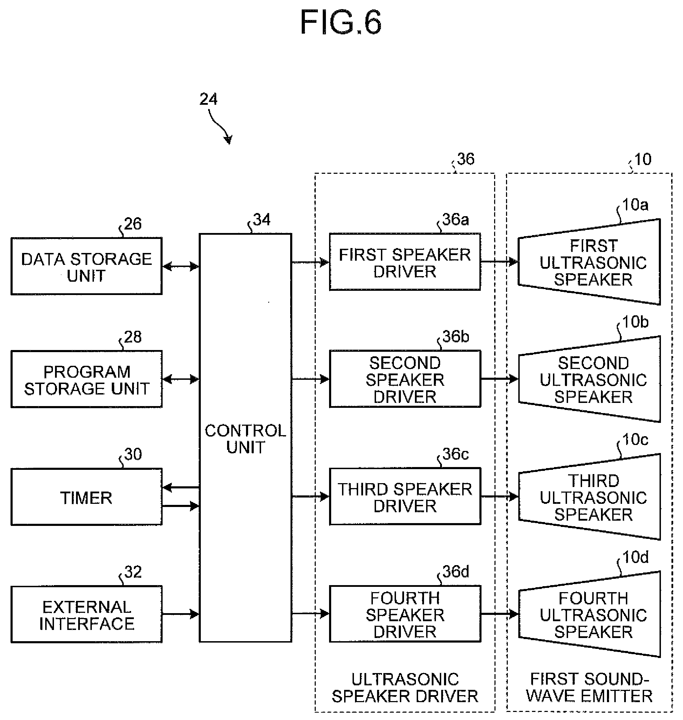

FIG. 6 illustrates an example of a functional block diagram of an information delivery system 24 of the present embodiment. Description with reference to FIG. 6 is made on an assumption that the first sound-wave emitter 10 includes the four ultrasonic speakers illustrated in FIG. 5.

The information delivery system 24 includes a data storage unit 26 (storage unit), a program storage unit 28 (storage unit), a timer 30, an external interface 32, a control unit 34, an ultrasonic speaker driver 36, and the first sound-wave emitter 10. As described above, the information delivery system 24 converts code information, which is associated with information to be provided, into an analog voltage signal to obtain ultrasound with a volume to be output, to provide the code information from the ultrasonic speakers. The code information can contain a common code (common element) defined to be common to the intended delivery regions formed by the first sound-wave emitter 10 and an individual code (individual element) defined for each piece of information. Each of the common code and the individual code can be represented by, for example, hexadecimal digits. The common code, to which, for example, six bytes are allocated, indicates identification information, mounted-position information, and/or the like concerning the first sound-wave emitter 10. An example of the common code is "1B3F26EDA7D5". Hence, the plurality of ultrasonic speakers included in the first sound-wave emitter 10 emits code information containing the same common code, which may be "1B3F26EDA7D5", for example. One byte, for example, is allocated to the individual code. An example of the individual code is "01". Hence, the individual codes of the code information emitted from the plurality of ultrasonic speakers included in the first sound-wave emitter 10 vary from each other (e.g., "01", "02", "03", and "04"). Note that some of the ultrasonic speakers may emit the code information with the same individual code. Hence, the total length of the code information having the 6-byte common code and the 1-byte individual code is 7 bytes.

The data storage unit 26 stores the "common code" indicating the identification information, mounted-position information, and/or the like concerning the first sound-wave emitter 10, out of the code information associated with information to be provided from the first sound-wave emitter 10, and "volume information" for ultrasound to be emitted from the first sound-wave emitter 10. The volume information may be, for example, a value corresponding to one-half a maximum volume of an ultrasonic speaker. The data storage unit 26 can be embodied as a rewritable non-volatile memory capable of retaining stored data even when power supply fails or is turned off.

The program storage unit 28 stores "program instructions" (hereinafter, "program") for all computations and control executed by the control unit 34 and a portion, which is the "individual code" assigned for each intended delivery region, of code information associated with the information to be provided from the first sound-wave emitter 10. The program storage unit 28 can be embodied as a rewritable non-volatile memory capable of retaining stored data even when power supply fails or is turned off. The data storage unit 26 and the program storage unit 28 may be embodied in separate storage units or, alternatively, in the same storage unit.

The timer 30 generates a trigger signal for the control unit 34 in accordance with preset "cycle information" to emit the code information in the form of ultrasound. Although the cycle information is set to, for example, one second in the present embodiment, the cycle information may be set as desired.

The external interface 32 is used for connection with a host processing apparatus, examples of which include a personal computer and a host system that performs centralized control of a plurality of the information delivery systems 24. More specifically, the "code information", "volume information", "program", "cycle information", and the like are provided from the external processing apparatus via the external interface 32.

The control unit 34 performs various computations in accordance with the program stored in the program storage unit 28.

The ultrasonic speaker driver 36 generates analog voltage signals for repeatedly delivering the pieces of code information associated with the respective intended delivery regions from the first sound-wave emitter 10 at volume stored in the data storage unit 26 and at a cycle set to the timer 30. In the example illustrated in FIG. 6, the ultrasonic speaker driver 36 includes a first speaker driver 36a, a second speaker driver 36b, a third speaker driver 36c, and a fourth speaker driver 36d. In another embodiment, the ultrasonic speaker driver 36 may be configured to perform centralized control of the first sound-wave emitter 10.

The first sound-wave emitter 10 emits ultrasound in accordance with the analog voltage signals generated by the ultrasonic speaker driver 36. In the example illustrated in FIG. 6, the first sound-wave emitter 10 includes the first ultrasonic speaker 10a, the second ultrasonic speaker 10b, the third ultrasonic speaker 10c, and the fourth ultrasonic speaker 10d, which are driven by a corresponding one of the first speaker driver 36a, the second speaker driver 36b, the third speaker driver 36c, and the fourth speaker driver 36d.

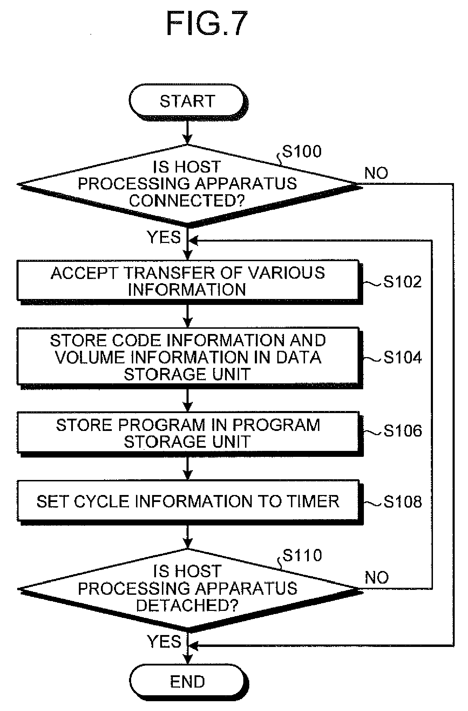

FIG. 7 is a flowchart for describing an example of a delivery preparation procedure carried out by the information delivery system 24. So long as no change is made on information to be delivered, it is sufficient to perform the delivery preparation process once at the start.

The control unit 34 of the information delivery system 24 determines whether or not a host processing apparatus (e.g., a personal computer, a host system, or a mobile terminal equivalent to a host system) is connected to the external interface 32 (S100). If the control unit 34 determines that a host processing apparatus is not connected (No at S100), the control unit 34 exits this procedure. If the control unit 34 determines that a host processing apparatus is connected (Yes at S100), the control unit 34 accepts various information transferred from the host processing apparatus (S102). For instance, the control unit 34 outputs a request signal requesting transfer of "program", "code information", "volume information", "cycle information" and the like to the host processing apparatus. When partial code information (i.e., a common code) and volume information are transferred from the host processing apparatus, the control unit 34 stores the partial code information and the volume information in the data storage unit 26 (S104). When a program is transferred from the host processing apparatus, the control unit 34 stores the program in the program storage unit 28 (S106). It is assumed that the program contains individual codes, each being for a corresponding one of the intended delivery regions. In another embodiment, the individual codes may be stored separately from the program. When cycle information is transferred from the host processing apparatus, the control unit 34 sets the cycle information (e.g., cycle information t (t=1 (sec))) to the timer 30 (S108).

If the host processing apparatus is detached from the external interface 32 (Yes at S110), the control unit 34 exits the procedure, thereby completing the delivery preparation process of the information delivery system 24. For example, the control unit 34 causes a status symbol representing "delivery preparation process is completed" to be displayed, for example. This display may alternatively be performed by changing a color of an LED (light-emitting diode) or the like included in the first sound-wave emitter 10, for example. If the host processing apparatus is not detached from the external interface 32 (No at S110), the control unit 34 causes processing to advance to S102 to continue accepting various information. The host processing apparatus may be configured to, when all information to be transferred has been transferred, transmit a signal representing that the processing apparatus is to be detached from the external interface 32 to the control unit 34, thereby urging the operator to detach the processing apparatus.

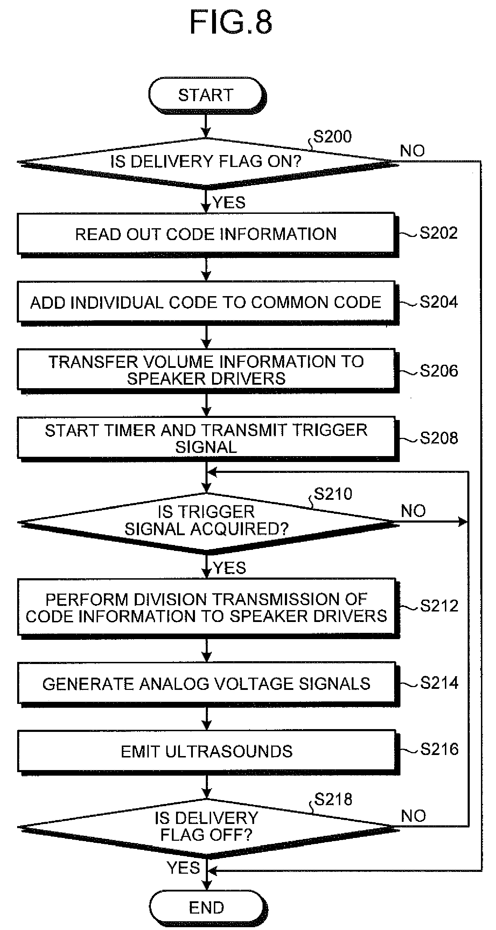

A code-information delivery procedure carried out by the information delivery system 24 of the present embodiment is described below with reference to the flowchart of FIG. 8. The control unit 34 loads and executes the program stored in the program storage unit 28 to start the delivery process. The control unit 34 determines whether or not a delivery flag for starting information delivery is ON. If the delivery flag is not ON (No at S200) or, put another way, information delivery is unnecessary, the control unit 34 ends the flow temporarily. If the delivery flag is ON (Yes at S200), the control unit 34 reads out the partial code information (the common code) from the data storage unit 26 and, furthermore, reads out individual codes, each being for a corresponding one of the intended delivery regions, contained in the program (S202). ON and OFF of the delivery flag can be switched by a facility manager or the like by operating a switch, for example.

Thereafter, the control unit 34 adds the individual code to the common code to generate 7-byte hexadecimal-digit code information. More specifically, the control unit 34 acquires, for example, "1B3F26EDA7D5" which are 6-byte hexadecimal digits, as the common code assigned to the first sound-wave emitter 10 from the data storage unit 26. The control unit 34 adds each of the individual codes which may be, for example, 1-byte hexadecimal digits, contained in the program to the common code, thereby combining each of the individual codes and the common code (S204). The individual codes are values associated in one-to-one relationship with the ultrasonic speakers. For instance, "01" (1-byte hexadecimal digits) may be associated as the individual code with the first ultrasonic speaker 10a; "02" (1-byte hexadecimal digits) may be associated as the individual code with the second ultrasonic speaker 10b. Similarly, "03" (1-byte hexadecimal digits) may be associated as the individual code with the third ultrasonic speaker 10c; "04" (1-byte hexadecimal digits) may be associated as the individual code with the fourth ultrasonic speaker 10d. Accordingly, as the four different pieces of information (code information) to be emitted from the first sound-wave emitter 10, pieces of code information of 7-byte hexadecimal digits, e.g., "1B3F26EDA7D501", "1B3F26EDA7D502", "1B3F26EDA7D503", and "1B3F26EDA7D504", are generated.

Thereafter, the control unit 34 acquires the volume information from the data storage unit 26 and transfers only the volume information to the first to fourth speaker drivers 36a to 36d of the ultrasonic speaker driver 36 (S206). At this time, the control unit 34 starts the timer 30. The timer 30 generates a trigger signal in accordance with the preset cycle information (which is one second in the present embodiment, for example) and transmits the trigger signal to the control unit 34 (S208).

If the control unit 34 acquires the trigger signal (Yes at S210), the control unit 34 divides each of the plurality of (four) different pieces of code information into a plurality of groups and transmits (emits) each piece of the code information to a corresponding one of the first to fourth speaker drivers 36a to 36d on a group-by-group basis (in short, performs division transmission (emission)) (S212). For instance, if code information "1B3F26EDA7D501" is given, the code information is divided into seven groups, which are "1B", "3F", "26", "ED", "A7", "D5", and "01". At this time, the individual code (in this example, "01") is emitted as the last group (i.e., the seventh group) subsequent to the common code (made up of the first six groups in this example). The control unit 34 completes division into the four different pieces of code information (groups) such that each piece has volume, by which the information is delivered at once, in this manner. For instance, the control unit 34 may divide the code information into groups each being of 1 byte. The control unit 34 transmits the groups to the first to fourth speaker drivers 36a to 36d with emission timings synchronized. More specifically, the control unit 34 performs division transmission of "1B3F26EDA7D501" to the first speaker driver 36a in the following order: "1B", "3F", "26", "ED", "A7", "D5", and "01". As described above, the individual code is transmitted after the common code has been transmitted (i.e., transmitted last). The control unit 34 performs division transmission of "1B3F26EDA7D502" to the second speaker driver 36b in the following order: "1B", "3F", "26", "ED", "A7", "D5", and "02". The control unit 34 performs division transmission of "1B3F26EDA7D503" to the third speaker driver 36c in the following order: "1B", "3F", "26", "ED", "A7", "D5", and "03". Similarly, the control unit 34 performs division transmission of "1B3F26EDA7D504" to the fourth speaker driver 36d in the following order: "1B", "3F", "26", "ED", "A7", "D5", and "04". In the present embodiment, "transmission (delivery) with emission timings synchronized" means that delivery is started at the same time and at the same speed (synchronous delivery).

Each time receiving 1-byte code information from the control unit 34, each of the first to fourth speaker drivers 36a to 36d converts the received 1-byte code information into an analog voltage signal (i.e., generates a voltage signal), with which volume according to the volume information received earlier is achieved (S214). Each of the first to fourth speaker drivers 36a to 36d transmits the generated analog voltage signal to a corresponding one of the first to fourth ultrasonic speakers 10a to 10d. Each of the first to fourth ultrasonic speakers 10a to 10d emits ultrasound (inaudible sound waves) in accordance with the received analog voltage signal (S216).

The control unit 34 determines whether or not the delivery flag is OFF. If the delivery flag is not OFF (No at S218), the control unit 34 causes processing to advance to S210, where the control unit 34 waits for acquisition of the next trigger signal to repeat processing at S210 and the following steps. If the delivery flag is OFF at S218 (Yes at S218), which may occur when a switch for stopping information delivery is operated by a facility manager, for example, the control unit 34 ends the flow and completes the series of processes.

If no trigger signal is acquired at S210 (No at S210), the control unit 34 waits for acquisition of the next trigger signal, and, if the next trigger signal is acquired, repeats processing at S212 and the following steps.

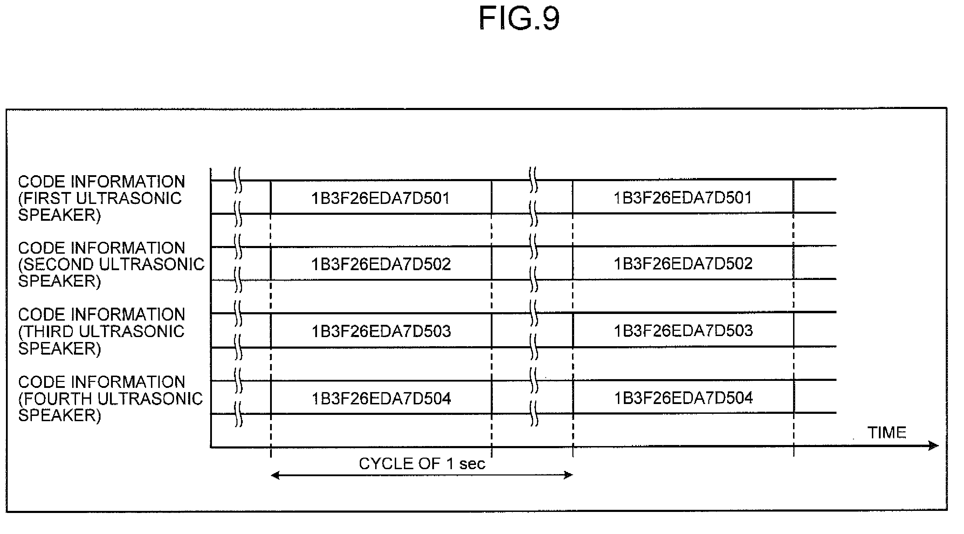

FIG. 9 illustrates an example of a timing diagram for code information delivery by the information delivery system 24. As illustrated in FIG. 9, the control unit 34 starts delivery of the generated pieces pf code information simultaneously at the same timing in accordance with a trigger signal fed from the timer 30. For example, a 1-byte common code, "1B", is delivered by each of the first to fourth ultrasonic speakers 10a to 10d so as to form a corresponding one of the first to fourth intended delivery regions 16 to 22. Thereafter, "3F" is delivered by the first to fourth ultrasonic speakers 10a to 10d. Delivery is performed in a similar manner with emission timings synchronized until "D5" is delivered. Lastly, the first to fourth ultrasonic speakers 10a to 10d deliver different individual codes, each being associated with a corresponding one of the first to fourth intended delivery regions 16 to 22, with the same emission timing. One cycle of code information delivery then ends.

When code information is delivered from the first to fourth ultrasonic speakers 10a to 10d with emission timings synchronized in this manner, even if a facility user moves across two or more of the first to fourth intended delivery regions 16 to 22, the facility user can acquire code information continuously.

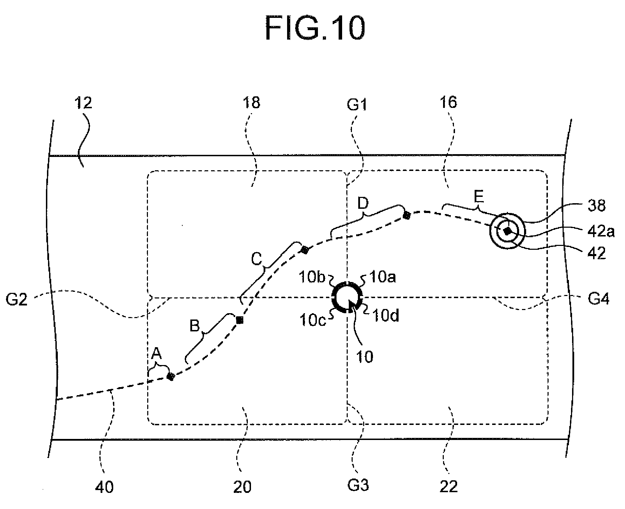

FIG. 10 is a view for describing an example of acquisition of code information by a facility user moving across a plurality of intended delivery regions. Referring to FIG. 10, as in FIG. 5, the first sound-wave emitter 10 is disposed on the ceiling surface of the passage 12. The first to fourth intended delivery regions 16 to 22 are formed with ultrasound emitted from the first to fourth ultrasonic speakers 10a to 10d. The geofences G1 to G4 are set up on the boundaries between the first to fourth intended delivery regions 16 to 22. Assume that a facility user 38 enters the passage 12 where the intended delivery regions are formed as described above from a region that is not covered by the first sound-wave emitter 10 and moves within the intended delivery regions covered by the first sound-wave emitter 10 as indicated by a trajectory 40. As described above, in the information delivery system 24, code information delivery is performed at a high speed (e.g., at intervals of one second). For this reason, in a period when the facility user 38 is moving within the intended delivery regions covered by the first sound-wave emitter 10, a microphone 42a of a mobile terminal 42 of the facility user 38 can receive code information a plurality of times. It should be noted that a time instant when the facility user 38 enters the intended delivery region does not necessarily coincide with a time instant when code information delivery starts. Therefore, in a "receiving period A" illustrated in FIG. 10, it is possible that the mobile terminal 42 receives third code information (1B3F26EDA7D503) from a middle portion (e.g., "A7") thereof. In this case, the mobile terminal 42 cannot acquire the entire code information (that is associated with specific content information provided in a web site). Accordingly, the facility user 38 cannot acquire the content information provided in the third intended delivery region 20 at this point in time.

Next, in a "receiving period B", the mobile terminal 42 of the facility user 38 can receive the entire third code information (1B3F26EDA7D503). Accordingly, the facility user 38 can acquire the content information provided in the third intended delivery region 20 at this point in time. Next, in a "receiving period C", when the facility user 38 enters, across the geofence G2, the second intended delivery region 18 at a time instant when receipt of the third code information (1B3F26EDA7D503) by the mobile terminal 42 is in progress, the code information being received changes to second code information (1B3F26EDA7D502). Accordingly, the mobile terminal 42 starts receiving the second code information (1B3F26EDA7D502) from a middle portion thereof. In the information delivery system 24 of the present embodiment, as illustrated in FIG. 9, code information (the common code) is delivered from the first to fourth ultrasonic speakers 10a to 10d with emission timings synchronized (i.e., delivery of the common code is synchronized). Therefore, even if a facility user enters another intended delivery region across a geofence when receipt of code information (the common code) is in progress, the facility user can receive the remaining portion of the common code. In division transmission of code information, each individual code is transmitted as the last one byte, which is transmitted after the common code has been transmitted. Therefore, the mobile terminal 42 can acquire the second code information (1B3F26EDA7D502) accordingly. Code information is received in a similar manner also in a "receiving period D", where the mobile terminal 42 receives a portion of the common code in the second intended delivery region 18 and receives the remaining portion of the common code in the first intended delivery region 16. The mobile terminal 42 receives an individual code in the first intended delivery region 16, thereby consequently acquiring first code information (1B3F26EDA7D501). In a "receiving period E", the mobile terminal 42 can receive the entire first code information (1B3F26EDA7D501).

Delivering code information from the first to fourth ultrasonic speakers 10a to 10d with emission timings synchronized in this manner allows, even if a facility user moves from one intended delivery region to another across a geofence, the facility user to receive a common code of the code information continuously so long as the facility user is within the intended delivery regions formed by the single first sound-wave emitter 10. By receiving an individual code in an intended delivery region where the facility user is situated at an instant when the last one byte of code information is emitted (transmitted), the facility user can acquire entire code information associated with specific content information provided in a web site. Thus, it is possible to acquire entire code information irrespective of a position where the common code is acquired so long as being within the intended delivery regions formed by the single first sound-wave emitter 10. Put another way, the need of acquiring the entire common code within a single intended delivery region can be eliminated. Accordingly, even if the facility user 38 moves across a plurality of intended delivery regions at high speed, the facility user 38 can reliably acquire code information associated with the intended delivery region where the facility user 38 is situated at an instant when an individual code is emitted.

In the present embodiment, the intended delivery regions formed by the single first sound-wave emitter 10 use the same common code and, furthermore, code information is divided into groups each being of 1 byte, for example. Therefore, the common code can be shared among the intended delivery regions. By combining the common code and an individual code, code information dedicated to each intended delivery region can be generated. In this case, the number of common codes to be stored in the data storage unit 26 for each of the first sound-wave emitters 10 is only one. Hence, the need of storing code information for each intended delivery region is eliminated, which contributes to reduction in a total amount of data. Furthermore, this can also lead to cost reduction by reducing the capacity of the data storage unit 26. When each individual code is configured as 1-byte hexadecimal digits as in the present embodiment, 256 (i.e., 16×16) different individual codes (and, accordingly, information codes, with which access to content information can be made) can be generated.

Although the present embodiment has been described through the example where code information is represented as 7-byte hexadecimal digits, this is only an example. The form of the code information can be selected as desired. Although the present embodiment has been described through the example where the code information is transmitted on a per-byte basis (i.e., two digits by two digits), this is only an example. The transmission volume can be selected as desired. For example, the code information may be transmitted on a per-half-byte basis (i.e., one digit by one digit). In this case, the individual code is one digit transmitted last; therefore, if the code information is represented as hexadecimal digits, 16 different individual codes can be generated.

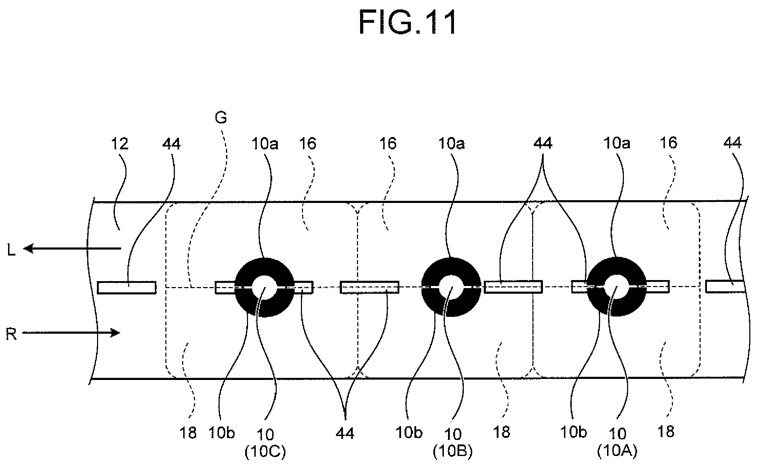

FIG. 11 is a top view for describing an example in which an intended delivery region of the information delivery system is divided into a first intended delivery region (the region for an inbound direction L) and a second intended delivery region (the region for an outbound direction R) in the width direction of the passage.

A plurality of the first sound-wave emitters 10 (in the example illustrated in FIG. 11, three first sound-wave emitters denoted by 10A to 10C) each including the first ultrasonic speaker 10a and the second ultrasonic speaker 10b is disposed, e.g., equidistantly on the ceiling surface of the passage 12 at approximately one-half the width (along a dividing line 44) of the ceiling surface of the passage 12. The respective first ultrasonic speakers 10a of the first sound-wave emitters 10 face a half of the passage 12 for the inbound direction L and emit ultrasounds based on the same code information (first code information) with emission timings synchronized, thereby forming the first intended delivery regions 16 that are continuous. Similarly, the second ultrasonic speakers 10b of the first sound-wave emitters 10 face a half of the passage 12 for the outbound direction R and emit ultrasounds based on the same code information (second code information) with emission timings synchronized, thereby forming the second intended delivery regions 18 that are continuous. Hence, the geofence G extending along the dividing line 44 is set up. It is assumed that each of the first ultrasonic speakers 10a and the second ultrasonic speakers 10b has an ultrasound transmission spread angle (emission spread angle) of approximately 180 degrees.

As a result, as in the example described above with reference to FIG. 1, the boundary (the geofence G) between the different pieces of code information can be disposed at a position based on the positions of the first sound-wave emitters 10 (e.g., right below the first sound-wave emitters 10). Accordingly, it is possible to reduce the distance from the first sound-wave emitters 10 to the geofence G (i.e., dispose the geofence G near the first sound-wave emitters 10). Put another way, the geofence G can be disposed at a position where ultrasound (volume) is maximum. As a result, irrespective of the position of an object (e.g., a facility user or a structure in the facility) that absorbs or reflects ultrasound in the first intended delivery region 16 or the second intended delivery region 18, the position where the ultrasound (volume) is maximum becomes less prone to displacement, which improves positional stability of the geofence G. Consequently, even if there are a large number of facility users in the passage 12, providing inbound-direction-dedicated content information to the first intended delivery region (the region for the inbound direction L) and providing outbound-direction-dedicated content information to the second intended delivery region (the region for the outbound direction R) can be achieved.

In the example of FIG. 11, the first sound-wave emitters 10A to 10C emitting the same code information are assumed as belonging to the same group that uses the same common code, which may be "1B3F26EDA7D5", for example. Accordingly, the first ultrasonic speakers 10a of the first sound-wave emitters 10A to 10C repeatedly emit the first code information, which may be "1B3F26EDA7D501", for example; the second ultrasonic speakers 10b repeatedly emit the second code information, which may be "1B3F26EDA7D502", for example. Hence, so long as a facility user is within the regions for the inbound direction L, the facility user can acquire the first code information, which may be "1B3F26EDA7D501", for example, whichever of the first intended delivery regions 16 formed by the first sound-wave emitters 10A to 10C the facility user is situated. Even if the facility user moves to the region for the outbound direction R across the geofence G, the facility user can acquire entire code information (which is associated with specific content information provided in a web site) in an intended delivery region where the facility user is situated when an individual code is delivered.

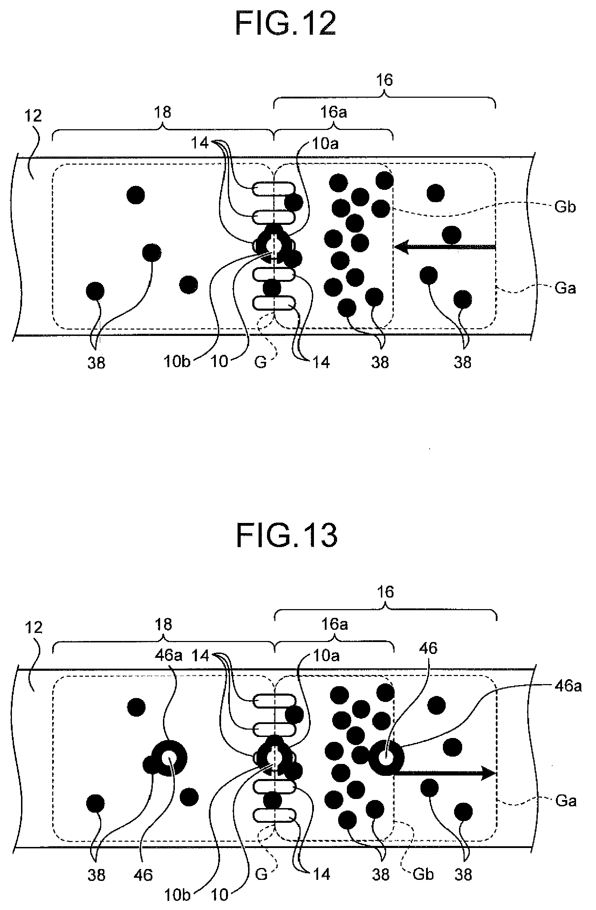

The information delivery system 24 including the first sound-wave emitter 10 can encounter the following situation. When a plurality of the facility users 38 is in, for example, the first intended delivery region 16 formed by the first ultrasonic speaker 10a, a geofence Ga further from the first sound-wave emitter 10 is undesirably displaced toward the first sound-wave emitter 10 as illustrated in FIG. 12. More specifically, there can be a situation where, because ultrasound from the first ultrasonic speaker 10a is absorbed by the facility users 38, the geofence Ga is displaced to the position of a geofence Gb, whereby a first intended delivery region 16a narrower than the first intended delivery region 16 that is to be formed is undesirably formed.

Under the circumstances, as illustrated in FIG. 13, the information delivery system 24 includes a second sound-wave emitter 46 that emits, toward the first intended delivery region 16 formed with ultrasound emitted from the first ultrasonic speaker 10a of the first sound-wave emitter 10, ultrasound representing the same code information as the code information emitted from the first ultrasonic speaker 10a. The second sound-wave emitter 46 includes an ultrasonic speaker 46a capable of 360-degree radiation, for example, of ultrasound. The position of the second sound-wave emitter 46 on the ceiling surface of the passage 12 is determined so as to form an intended delivery region that covers the first intended delivery region 16 formed by the first ultrasonic speaker 10a of the first sound-wave emitter 10. The ultrasonic speaker 46a of the second sound-wave emitter 46 emits the same code information as the code information emitted from the first ultrasonic speaker 10a of the first sound-wave emitter 10 simultaneously (with emission timings synchronized). Disposing the second sound-wave emitter 46 in this way makes it possible to prevent formation of the first intended delivery region 16a, which is undesirably narrowed by absorption of ultrasound by the facility users 38, and form the first intended delivery region 16 that is to be formed. As a result, the first code information can be received reliably and stably so long as the first code information is received within the first intended delivery region 16 irrespective of presence or absence of the facility users 38. A similar advantage can be obtained also in the second intended delivery region 18 by disposing the second sound-wave emitter 46 and causing the second sound-wave emitter 46 to emit the same code information as the code information emitted from the second ultrasonic speaker 10b with emission timings synchronized in a similar manner.

Any sound-wave emitter capable of emitting the same code information as code information emitted from the first sound-wave emitter 10 toward an intended delivery region that is to be formed with ultrasound emitted from the first sound-wave emitter 10, thereby forming the same intended delivery region can be used as the second sound-wave emitter 46. Although FIG. 13 illustrates an example where the second sound-wave emitter 46 is disposed approximately at a center of the ceiling surface, alternatively, the second sound-wave emitter 46 having an ultrasound transmission spread angle of approximately 180 degrees may be disposed on a side wall surface of the passage 12. In this case, the second sound-wave emitter 46 may be disposed on one or both of the side wall surfaces of the passage 12.

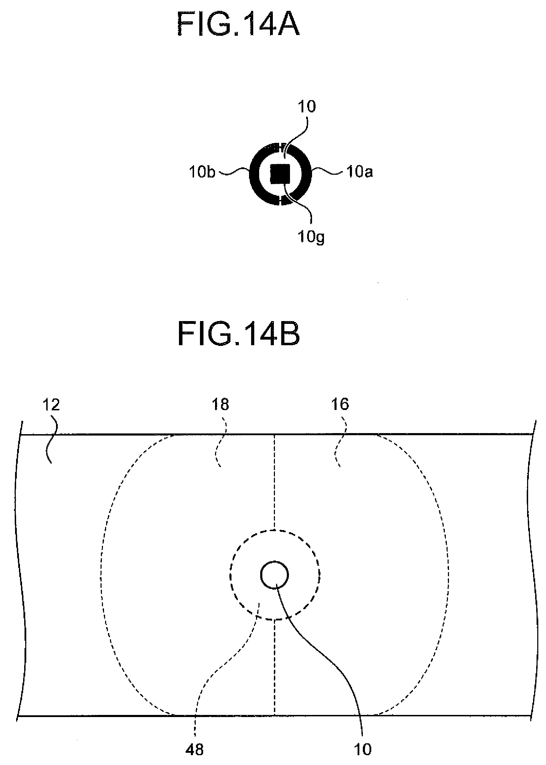

FIGS. 14A and 14B are diagrams of a modification example of the information delivery system of the embodiment. FIG. 14A illustrates a modification of an ultrasonic speaker layout of the first sound-wave emitter 10. FIG. 14B is a view for describing intended delivery regions formed by the first sound-wave emitter 10. In this case, the first sound-wave emitter 10 can form first delivery regions and a second delivery region, which differ in the size of intended delivery region such that the second delivery region is narrower than the first delivery region. More specifically, the first sound-wave emitter 10 includes a spot ultrasonic speaker 10g that performs second delivery, by which the second delivery region is formed, in addition to the first ultrasonic speaker 10a and the second ultrasonic speaker 10b that perform first delivery, by which the first delivery regions are formed. Hence, the first sound-wave emitter 10 can emit three different pieces of code information. The spot ultrasonic speaker 10g has a shape similar to the shape of the flat-surface speaker 10m illustrated in FIG. 3A, for example, and emits highly-directive ultrasound toward a narrow area. Accordingly, the first sound-wave emitter 10 forms the first intended delivery region 16 having a large delivery region and the second intended delivery region 18 having a special intended delivery region 48, which is smaller than the first intended delivery region 16. The special intended delivery region 48 is a region where spot delivery (the second delivery) for a narrow delivery region is to be performed. By contrast, each of the first intended delivery region 16 and the second intended delivery region 18 is a region where area delivery (the first delivery) for a delivery region wider than the special intended delivery region 48 is to be performed. In this case, for instance, it is possible to cause a facility user moving through the passage 12 to acquire special code information only when the facility user moves to a position right below the first sound-wave emitter 10 (the spot ultrasonic speaker 10g), thereby increasing variation of information delivery patterns.

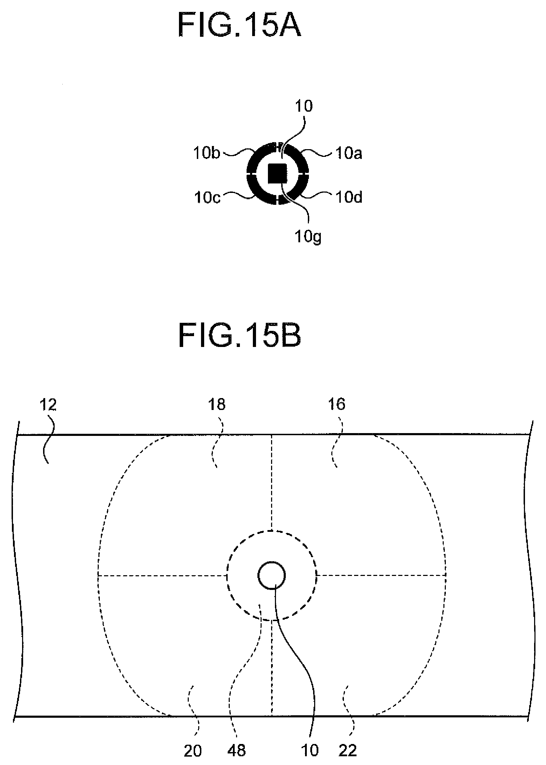

FIGS. 15A and 15B are views of a modification example of the information delivery system illustrated in FIGS. 14A and 14B. FIG. 15A illustrates a modification of the ultrasonic speaker layout of the first sound-wave emitter 10. FIG. 15B is a view for describing intended delivery regions formed by the first sound-wave emitter 10. In the example illustrated in FIGS. 15A and 15B, the first sound-wave emitter 10 includes the first ultrasonic speaker 10a, the second ultrasonic speaker 10b, the third ultrasonic speaker 10c, and the fourth ultrasonic speaker 10d that form the first delivery regions (where the area delivery is to be performed). The first sound-wave emitter 10 further includes the spot ultrasonic speaker 10g that forms the second delivery region (where the spot delivery is to be performed). Hence, the first sound-wave emitter 10 can emit five different pieces of code information. The modification illustrated in FIGS. 15A and 15B is the same as the modification illustrated in FIGS. 14A and 14B except for being configured to emit five different pieces of code information and form five intended delivery regions. Accordingly, the modification illustrated in FIGS. 15A and 15B can provide an advantage similar to the advantage provided by the modification illustrated in FIGS. 14A and 14B and further increase the variation of information delivery patterns. Although the spot ultrasonic speaker 10g is directed toward the position right below in the examples illustrated in FIGS. 14A to 15B, alternatively, the spot ultrasonic speaker 10g may be inclined so as to form the special intended delivery region 48 in the first intended delivery region 16, for example.

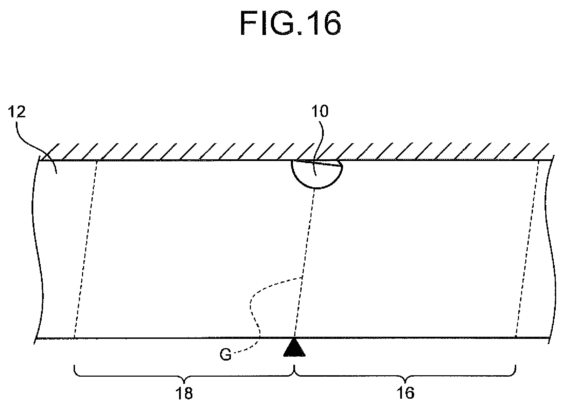

In the examples described above, as illustrated in FIG. 2, the geofence G is set up at the position right below the first sound-wave emitter 10. More specifically, in the examples described above, the first sound-wave emitter 10 is disposed over (right above) the boundary between the different intended delivery regions. In this case, because a separation surface disposed by the geofence G extends vertically through the position of the first sound-wave emitter 10 in the space of the passage 12, information delivery regions can be defined accurately. In another embodiment, the first sound-wave emitter 10 may be tilted as illustrated in FIG. 16 to adjust the position of the geofence G. Such disposition is effective for, for example, a situation where the first sound-wave emitter 10 cannot be disposed right above the geofence G due to interference with a structure in the facility, and can increase the degree of freedom in disposition of the first sound-wave emitter 10.

Although the embodiments have been described by way of the examples where the information delivery system 24 is applied to the passage 12, applications are not limited thereto. The information delivery system 24 is also applicable to, for example, a space, such as a hall or an indoor plaza, and an open space without a roof and a wall and can provide a similar advantage. For instance, the information delivery system 24 may be configured to deliver different pieces of content information to respective zones in a hall or a plaza.

The first sound-wave emitter 10 may have any configuration so long as can emit, to a plurality of intended delivery regions (e.g., two or more different intended delivery regions), pieces of information for the respective intended delivery regions, in a form of inaudible sound waves. Accordingly, the number of ultrasonic speakers can be changed as desired as illustrated in FIGS. 14A to 15B. The number of the ultrasonic speakers can be determined depending on the number of different pieces of information to be delivered (i.e., the number of the intended delivery regions to be formed), for example. If, as a basic configuration, five ultrasonic speakers are used as illustrated in FIGS. 15A and 15B and the same information is delivered from two or more of the ultrasonic speakers, an operation similar to the operation performed by such a configuration including two ultrasonic speakers as illustrated in FIG. 1, for example, can be implemented. In short, it is possible to adapt to changes in the number of pieces of information to be delivered and/or the number of intended delivery regions only by changing the control method applied to the information delivery system. As a result, standardization of the information delivery system and cost reduction associated with the standardization can be achieved.

Each of FIG. 1 and FIG. 5 illustrates an example configuration where the ultrasonic speakers are the same in shape and radiate ultrasound at approximately the same angles. However, the radiation angle may vary among ultrasonic speakers. For instance, a configuration where the radiation angle of some of the ultrasonic speakers is 180 degrees, while the radiation angle of the others is 45 degrees, can be employed. This configuration enables the sizes (areas) of the intended delivery regions to be adjusted, thereby increasing variation of delivery patterns.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. An information delivery system comprising:
a storage unit configured to store a plurality of pieces of information to be delivered to a plurality of respective intended delivery regions;
a first sound-wave emitter configured to emit the pieces of information for the respective intended delivery regions toward the plurality of intended delivery regions in a form of inaudible sound waves; and
a control unit configured to cause the first sound-wave emitter to emit the pieces of information stored in the storage unit.

2. The information delivery system according to claim 1, wherein
each of the pieces of information is associated with corresponding code information,
the code information containing a common code defined to be common to the plurality of intended delivery regions formed by the first sound-wave emitter, and an individual code defined for each of the pieces of information.

3. The information delivery system according to claim 2, wherein the control unit synchronizes timings of emitting the code information toward the intended delivery regions in the form of inaudible sound waves.

4. The information delivery system according to claim 2 or 3, wherein the control unit divides the code information into a plurality of groups to emit the code information on a group-by-group basis, and emits the individual code as the last group subsequent to the common code.

5. The information delivery system according to any one of claims 1 to 4, further comprising
a second sound-wave emitter configured to emit, in a form of an inaudible sound wave, the same information as information to be emitted from the first sound-wave emitter in a form of an inaudible sound wave toward an intended delivery region formed with the inaudible sound wave emitted from the first sound-wave emitter, wherein
the control unit causes the first sound-wave emitter and the second sound-wave emitter to emit the same information in synchronization with each other.

6. The information delivery system according to any one of claims 1 to 5, wherein the first sound-wave emitter can set first delivery for forming a first delivery region as an intended delivery region, and second delivery for forming a second delivery region as an intended delivery region, the second delivery region being narrower than the first delivery region.

7. The information delivery system according to any one of claims 1 to 6, wherein the first sound-wave emitter is disposed over a boundary between different two of the intended delivery regions.

8. The information delivery system according to any one of claims 1 to 7, wherein the first sound-wave emitter comprises a surface sound source.

9. The information delivery system according to claim 8, wherein the surface sound source has a curved shape.
